Europäisches Patentamt

European Patent Office

Office européen des brevets

(19)

(11) EP 1 036 878 B1

(12) EUROPEAN PATENT SPECIFICATION

(45) Date of publication and mention
of the grant of the patent:
21.05.2003 Bulletin 2003/21

(51) Int Cl.⁷: **D21C 5/02**, B27N 1/02,
C08G 18/64, C08L 97/02,
C08J 5/04

(21) Application number: 00105358.6

(22) Date of filing: 17.03.2000

(54) **Method of liquefying paper, liquefied paper composition and method of manufacturing plastic molding from liquefied paper composition**

Verfahren zum Papierverflüssigen, Verflüssigte Papierzusammensetzung und Verfahren zur Herstellung eines Kunststofformteils mit dieser Papierzusammensetzung

Procédé de liquefaction du papier, composition liquide comprenant du papier et procédé pour la fabrication de pièces moulées plastiques avec cette composition

(84) Designated Contracting States:
DE FR GB

(30) Priority: 18.03.1999 JP 7446099

(43) Date of publication of application:
20.09.2000 Bulletin 2000/38

(73) Proprietor: KABUSHIKI KAISHA TOSHIBA
Kawasaki-shi, Kanagawa-ken 210-8572 (JP)

(72) Inventors:
• Saya, Shioko
1-1-1, Shibaura, Minato-ku Tokyo (JP)
• Thai, Cao Minh
1-1-1, Shibaura, Minato-ku Tokyo (JP)
• Komatsu, Izuru
1-1-1, Shibaura, Minato-ku Tokyo (JP)

(74) Representative: HOFFMANN - EITLE
Patent- und Rechtsanwälte
Arabellastrasse 4
81925 München (DE)

(56) References cited:
US-A- 5 110 915

• PATENT ABSTRACTS OF JAPAN vol. 1997, no.
02, 28 February 1997 (1997-02-28) & JP 08 284084
A (AIN ENG KK), 29 October 1996 (1996-10-29)
• DATABASE WPI Section Ch, Week 199442
Derwent Publications Ltd., London, GB; Class
A97, AN 1994-338373 XP002140802 & JP 06
263880 A (RENGO CO LTD), 20 September 1994
(1994-09-20)

EP 1 036 878 B1

## Description

Field of the Invention

The present invention relates to a method of liquefying a used paper material, a liquefied paper composition obtained by the liquefying method, and a method of manufacturing a plastic molding using the liquefied paper composition; for efficiently manufacturing a plastic molding which is replaceable with a conventional plastic molding.

Description of the Prior Art

The resources on the earth have been used by the humankind to create various products, in order to improve and enrich their lives. For example, the wood resources have been utilized to manufacture paper materials which are applied to news papers, magazines, recording media which are to be used in OA (office automation) devices and the like, and the fossil resources such as petroleum and the like have been utilized to manufacture plastic moldings and other chemical products. In this connection, there is a steady increase in the amount of the fossil resources consumed for manufacturing the products, and it has reached at present an enormous amount. However, the natural resources are in fact limited, though people tend to have such hallucination that they were rich enough and endless. In view of environmental protection and use of resources with advantage, it is therefore earnestly desired to reduce consumption of the resources and promote recycle of the used resources. In the circumstances as described above, it is being proceeded to develop the recycling technology for various resources.

However, recycling of plastic moldings as a fossil resource includes various problems and they seem not to be easily solved for technical and economical reasons.

Therefore, recovering and reclamation of plastic moldings are not satisfactorily carried out. Moreover, the plastic moldings that can be reclaimed comprise only a limited part of the whole plastics. Accordingly, even if recovering of the plastics are advanced to raise the recycling ratio in comparison with the present time, the amount of fossil resource required for manufacturing moldings will not fall very much and it will be therefore difficult to decrease the consumption of the fossil resource.

On the other hand, as to the wood resources, the technique for reclaiming used paper has been established and it has been recommended to recover the used paper such as paper sheets recorded by office automation devices, news paper, magazines and the like, in order to spread the recycle of reclaimed paper. However, due to the problem of the cost for treatments which are carried out at the paper reclamation, such as removal of printed ink and the like, the amount of used paper which is effectively utilized for reclamation is possibly reduced to no more than a part of the whole of the recovered paper. Accordingly, a large amount of extra used paper may remain after the recycle. If such a state continues for a long time, recycle of used paper cannot help being inhibited, resulting in placing a large obstacle in the way of efficient utilization of the wood resources.

In the circumstances as described above, there are demands for activation of recycle by developing technique which enables application of a resource to a novel recycling use to accelerate circulation of resources, in particular, recycling technique which enables to recycle one resource as another resource, in order to increase the efficiency in utilization of natural resources.

US 5,110,915 discloses a lignocellulose phenolic compound composite product having a weight ratio of the lignocellulose material to the phenolic compound of 0.4 to 1.0 to 5.1 to 1.0 which is prepared by heat dissolving the lignocellulose material in a solvent comprising as a main component at least one phenolic compound, optionally in the presence of a dissolving acid catalyst and then adjusting the amount of the phenolic compound to the level as mentioned above.

SUMMARY OF THE INVENTION

With these problems in mind, therefore, it is the primary object of the present invention to provide a novel recycling technique which enables crossover recycling between different resources, and in which an extra part of the recovered used paper is used in a novel recycling use to activate the recycling, thereby the paper resource can be sufficiently recycled.

Moreover, it is the secondary object of the present invention to provide a crossover recycling technique which enables to convert a non-plastic material to a material for manufacture of plastic products.

In order to achieve the above-mentioned object, a method of liquefying a paper material, according to the present invention, comprises the steps of: shear breaking the paper material into small pieces of paper; mixing the small pieces of paper with a liquefying agent comprising: an alkaline catalyst or an acidic catalyst; and at least one liquid compound which is selected from the group consisting of hydroxyphenyl compound, polyol and cyclic ester, to obtain a mixture; and heating the mixture, thereby obtaining a liquefied paper composition.

In the liquefying method, the used paper material is broken at the shear breaking step so that the length of the longest side of each piece of the broken paper in at least 50 % by weight of the broken paper is 5 mm or less.

In one aspect of theinvention, the paper material is broken at the shear breaking step so that the paper fibers of the broken paper are not raised, and the length of the shortest side of each piece of the broken paper in at least 50 % by weight of the broken paper is 0.5 mm or less.

In another aspect, the paper material is pulp sludge, and the paper material is cut at the shear breaking step so that the ratio of paper fibers having a length of 1 mm or more is reduced to 20 % by weight or less.

In further aspect, the paper material includes at least one material from the group consisting of coated paper, resin-composited paper and shredded paper, and the mixing step and the heating step are performed by using an extruder.

Moreover, a liquefied paper composition, according to the present invention, comprises: a liquid compound which is selected from the group consisting of hydroxyphenyl compound, polyol and cyclic ester; and a liquefied matter of paper fibers, wherein the ratio of a paper residue in the liquefied paper composition is 20 % by weight or less.

Moreover, a method of manufacturing a plastic molding from a paper material by using the liquefied paper composition obtained by the above-described liquefying method comprises the steps of: mixing the liquefied paper composition with isocyanate compound and a urethane polymerization catalyst or with a curing agent for phenol resins; and molding the mixture of the liquefied paper composition into the plastic molding.

BRIEF DESCRIPTION OF THE DRAWINGS

The features and advantages of the paper liquefaction method, the liquefied paper composition and the manufacturing method of plastic moldings from a paper material according to the present invention over the conventional method will be more clearly understood from the following description of the preferred embodiments of the present invention taken in conjunction with the accompanying drawing.

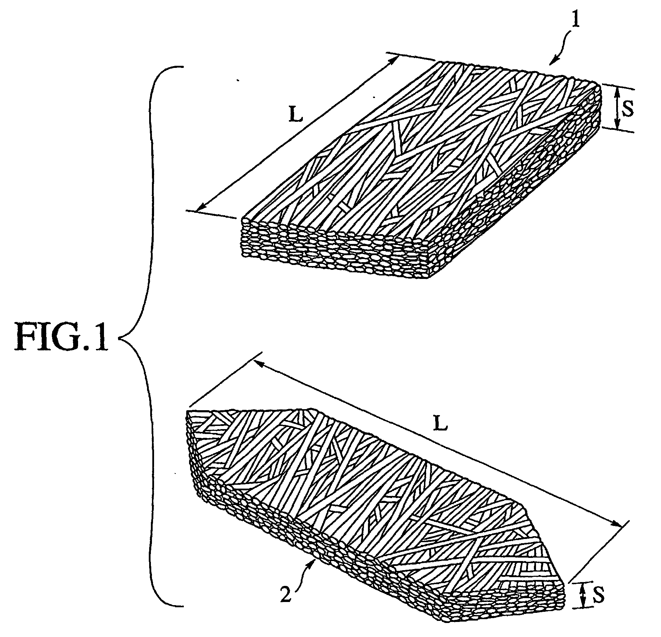

Fig. 1 is a schematic view showing the broken paper pieces according to the present invention.

DETAILED DESCRIPTION OF THE PREFERRED EMBODIMENTS

The inventors of the present application have performed various researches about solution of the above-described problems. As a result, they have found that it is possible to efficiently liquefy the used paper, and to manufacture a plastic moldings having good quality with use of the liqefied paper.

Now, preferred embodiments of the method of liquefying paper, of the liquefied paper composition obtained by the liquefaction method, and of the manufacturing process of a plastic molding from the liquefied paper composition according to the present invention will be described.

Generally, paper is manufactured, using pulp which comprises cellulose fibers of wood or other plants and the main body of paper is composed of lignocellulose ("lignocellulose" is used as a generic designation including cellulose, hemicellulose and lignin). As for the wooden material, there is a conventional liquefaction method of liquefying lignocellulose and preparing a resin therefrom, and it is known from the publication documents of Japanese Laid-Open Patent No. S61-261358, Japanese Laid-Open Patent No. S62-79230 and Japanese Laid-Open Patent No. H8-225653.

However, the conventional liquefying method described above is unsuitable for practicing liquefaction of paper lignocellulose and manufacture of a plastic molding from the liquefied material. Namely, a few serious problems arise to hinder the practice of it.

Specifically, the first problem resides in that it takes a quite long time with the conventional liquefaction method to liquefy merely a small amount of wood lignocellulose on an experimental scale. Accordingly, it is impossible to cope with industrial production on a large scale. Moreover, the object of the conventional liquefaction method is a wooden material which is different from paper in composition and organic structure, and it is therefore unadaptable to liquefaction of a paper material.

The second problem resides in that, since paper is an aggregate of fibers and has a structure with high ability to hold the air therein, it is easily hindered by the remaining air from contacting with a liquefying agent which has greatviscosities. In this connection, there is another hinderance by various additives such as dyestuff, coating materials and the like, which are applied to the paper in order to impart an appropriate function required in accordance with its utility. These additives also hinder the paper from contacting with the liquefying agent to often inhibit the advance of liquefaction. Furthermore, the fibers in paper are tightly piled up to make a pretty large density, and that is another reason of a low liquefaction rate per unit weight of paper and a long time that is necessary for liquefaction.

In short, a matter of importance in practice of liquefaction of paper as a recycling technology resides in that liquefaction must be realized with high efficiency on an industrial production scale for treatment of a large amount of paper. In order to achieve this purpose, it is proposed according to the present invention that paper is broken into small pieces like fish scales or other like things, and the broken paper are put into a liquefying agent containing a catalyst for liquefying those pieces of paper, so that the pieces of paper easily contact with the liquefying agent and the liquefaction rate per unit weight is improved. A purpose of breaking the paper to be treated into pieces is to Increase the ratio, per unit weight paper, of the surface area on which the paper may contact with the liquefying agent, and to reduce the hinderance from contacting with the liquefying agent which is caused by a coating material on the surface of paper or the like. Moreover, it is another purpose to develop penetration of the liquefying agent from the cut section along the paper fibers into the paper.

Since common paper has a pretty large density, paper can be formed into particles having extremely high movability or fluidability by breaking it into small pieces. It also becomes easy to mix the paper with the liquefying agent which is highly viscous, due to reduction of contact hinderance. Moreover, workability at the step of placing the paper into the liquefying agent is remarkably improved by good fluidability of the paper particles. Particularly, when liquefaction is operated by using an extruder which is capable of enhancement of liquefaction reaction by pressing and mixing and of continuous processing, breaking of the paper into pieces is a great influence upon whether the liquefaction is possibly realized or not. In other words, it is quite important to break into small pieces the paper to be liquefied, for liquefaction with an extruder which is quite promising for practical recycle of paper as a material for plastic reproduction. This matter is also an advantageous feature for enabling to advance effective recycle of the used paper which is shredded under the necessity of information management and which cannot help being abandoned because of reclamation of shredded paper being impossible.

It is unnecessary to restrict the kind of paper which is used as a starting material for manufacturing liquefied lignocellulose. As examples of the starting material illustrated are paper sheets used in office automation devices, news paper, magazine paper, cardboad, wrapping paper, thermosensible paper, coated paper, resin-composite paper and the like, and pulp materials such as pulp sludge and the like can also be included in the starting material. As described above, it is possible to suitably use shredded paper as a material. Coated paper is a paper material that a coating is applied on the surface of a paper base and it is often used for a cover page of magazines, a poster, a catalogue, a pamphlet and the like. The resin-composite paper is a paper material which a layer of resin is adhered or laminated on the surface of a paper base or incorporated in the paper base. In either case of the coated paper and the resin-composite paper, it is required for paper recycle by the conventional method to remove the coating or the resin.

The raw paper is broken with shearing action into pieces as small as possible. It is shear-cut in such a manner that, as shown in FIG. 1, the length L of the longest side of each paper piece in at least 50 % of the broken paper pieces 1, 2 is about 5 mm or less, preferably about 2 mm or less. As a better mode, it is further desired that the length S of the shortest side (or thickness) is 0.5 mm or less, preferably about 0.2 mm or less. If the raw paper is thick, it is cut smaller, accordingly. It is preferred that the paper pieces have a simple shape that has substantially no complication by projection and concavity, and preferable shapes are, for example, a rectangular solid or strip, a fish scale-like slice, a circular disk, a rod and the like. If the paper pieces have a complicated shape with projections and concavities, they are easily entangled in each other and the fluidity of paper pieces domes down. As a result, the air is held in the concavities or gaps between the paper pieces and easily inhibits the paper pieces from contacting with the liquefying agent. The device used for cutting the paper is desirably a breaking device using shearing action, such as a shledder, a milling cutter and the like. In these breaking devices, breaking is performed in the style of cutting or shearing with cutting blades. In a condition like those, the fibers of paper are appropriately cut so that the broken pieces of paper are prevented from gigging at the cut section like cotton rags.

The broken paper obtained by the above breaking operation is rather dense, and it has, in general, a bulk density of about 0.1 g/cm$^3$ or more.

If the paper is cut into larger dimensions than the preferable dimensions described above, the bulkiness of the paper pieces and the volume of the air held between the paper pieces increase, which produces hindrance when putting a large amount of paper pieces into an extruder and controlling the amount of paper pieces put into it. Moreover, uniformity in quality of the liquefied product is reduced and quality of the plastic product manufactured from the liquefied product is not kept constant. If cutting ability of the used cutting instruction is poor, the fibers of paper are loosened at the cut section of the paper pieces and gigging is caused to make the paper pieces bulky like cotton rags. As a result, the paper pieces may be, in some case, entangled with each other by the raised fibers to make a lump of paper pieces. In such a state, it is difficult not only to put the paper pieces into the extruder, but also to penetrate the liquefying agent into the spaces between the lumped paper pieces. Accordingly, liquefaction reaction does not uniformly proceed, and this makes inconstant quality of the liquefied product. In a case where the paper is in a state in which the paper fibers are loosened like raw cotton or raised and entangled to make lumps, or in a case of pulp sludge, the paper should be cut using a shearing machine such as a shredder, milling cutter, etc. so that the ratio of fibers having a length of 1 mm or more is reduced to 20 % or less, desirably 10 % or less, before starting the liquefaction treatment. According as the amount of fibers having a length of 1 mm or more increase, the paper pieces easily make lumps.

As understood from the above description, the used paper ordinarily recovered from the users can be liquefied after breaking into pieces having a shape as described above.

The paper to be liquefied may contain a wood powder or a starch such as corn, rice and the like. Moreover, it may be mixed with a filler made of a powder of silica, alumina, talk or the like and having a particle size of 5 μm or less, in order to improve the fluidability of the raw material at the liquefaction step.

The paper pieces broken as described above are added to the liquefying agent and then heated, thereby obtaining a liquefied matter of lignocellulose. The liquefying agent is a liquidus mixture comprising: an alkaline or acidic catalyst; and at least one liquidus compound which is selected from the group consisting of hydroxyphenyl compounds, polyols and cyclic esters. The alkaline or acidic catalyst is used at an amount sufficient for developing the liquefaction reaction. An suitable example of the liquefying agent comprises the alkaline or acidic catalyst at a ratio of 0.2 to 10 % by weight relative to the paper pieces, and the liquidus compound at a ratio of 50 to 300 % by weight relative to the paper pieces. Preferably, the ratio of the catalist to the paper pieces is 1 to 5 % by weight, and the ratio of the liquidus compound to the paper pieces is 80 to 200 % by weight.

For the hydroxyphenyl compound, phenol, cresol, xylenol, resorcinol, acrylic resorcinol, bisphenol A and the like can be suitably used, but it should not be limited to these compounds.

For the polyols, illustrated are, for example, bivalent alcohol such as ethylene glycol, propylene glycol, trimethylene glycol, 1,4-butanediol, 1,5-pentanediol, 1,6-hexanediol, 1,2-hexanediol, 2,4-hexanediol, 1,7-heptanediol, 1,8-octanediol, 1,9-nonanediol, 1,10-decanediol, pinacol, cyclopentane-1,2-diol, cyclohexane-1,4-diol, polyethyleneglycol, polyoxypropyleneglycol, polyoxypropylene-polyoxyethylene glycol and the like; and trivalent or polyvalent alcohol such as glycerin, trimethyrolpropane, triethanolamine, 1,2,6-hexanetriol, pentaerythritol, methyl glucoside, sorbitol, mannitol, sucrose and polyether polyol partially containing a polycaprolacton in which either of the above described polyol compounds is a starting material, and the like. However, the polyol in the present invention should not be limited to the above-described compounds. Among these compounds, a mixture of glycerin and polyethyleneglycol is cheep and industrially available. Therefore, this mixture is especially suitable to use for the liquefaction of paper according to the present invention.

For the cyclic esters, such compounds that are able to make ring opening reaction and polymerize is suitable. For example illustrated are propiolactone, β-butylolactone, α,α'-bischloromethylpropiolactone, α,α-dimethyl-β-propionolactone, δ-valerolactone, 1,4-dioxane-2-on, glycolide, trimethyl carbonate, neopentyl carbonate, ethylene oxalate, propion oxalate, ε-caprolactone, α-methyl-ε-caprolactone, β-methyl-ε-caprolactone, γ-methyl-ε-caprolactone, 4-methyl-7-isopropyl-ε-caprolactone, 3,3,5-trimethyl-ε-caprolactone, cis-disalicylide, trisalicylide and the like. However, it should not be limited to the above-described compounds. Among these compounds, ε-caprolactone is cheep and industrially available. Therefore, this compound is especially suitable to use for the liquefaction of paper according to the present invention.

For the alkaline catalyst illustrated are, for example, alkaline metal hydroxide such as sodium hydroxide, potasium hydroxide and the like; alkaline-earth metal hydroxide such as calcium hydroxide and the like; alkaline-earth metal carbonate such as calcium carbonate and the like; and ammonia and amino compounds such as monoethanolamine and the like. However, it should not be limited to these compounds.

The acidic catalyst includes, for examples, inorganic acid compounds, organic acid compounds, Lewis acid compounds and the like. Specifically, sulfuric acid, hydrochloric acid, toluensulfonic acid, phenol sulfonic acid, aluminum chloride, zinc chloride, boron trifluoride and the like can be preferably utilized for the acidic catalyst. However, it should not be limited to the above examples.

For advancing the liquefaction of paper, mixing operation such as stirring or kneading is necessary and it is preferred to use an apparatus possessing a heating function and a mixing function. In a case where bulk production capacity and efficiency are further required, use of an extruder is desirable because continuous liquefaction is possible with it and pressuring and stirring are possibly performed during the liquefaction treatment. In this case, a mixture of the paper and the liquefying agent is suitably put into the extruder and kneaded while it is heated. Use of a twin-screw extruder in which the raw paper may be further broken into smaller pieces is preferable because the liquefaction efficiency is remarkably raised.

The heating temperature during the liquefaction treatment is within a range of 100 to 200 °C, preferably 150 to 190 °C. The time necessary for the liquefaction varries depending on the degree of stirring or kneading. However, an appropriate liquefaction time, as an example, can be illustrated as being 5 to 20 minutes for a case where stirring at the rate of 5 to 150 rpm is performed in the extruder.

In accordance with the liquefaction operation as described above, a paper material is liquefied.

The liquefied paper obtained above, i.e., the liquefied paper composition containing liquefied lignocellulose, is mixed with a neutralizer to use as a raw material of chemical products. Specifically, it is used for manufacturing a urethane coating, a urethane adhesive or the like. Alternatively, it may be mixed with an isocyanate compound and a polymerization catalyst, and, as necessity arises, further mixed with a surfactant, a foaming agent, a foam stabilizer, a filler and the like. to mold the mixture, thereby it is possible to manufacture various products such as cushioning materials, thermal insulation materials, construction materials, automobile parts of molding by RIM (Reaction Injection Molding) or R-RIM (Reinforced Reaction Injection Molding), various elastomers and flooring materials, etc. In this connection, the usable isocyanate compound may generally include isocyanate compounds having at least two isocyanate (-NCO) groups, and, in particular, use of MDI (diphenylmethane-4,4'-diisocyanate), TDI (tolylene diisocyanate), NDI (1,5-naphtalene diisocyanate) or H12MDI (hydrogenated MDI) is preferred.

In a case where paper is liquefied with use of a hydroxyphenyl compound, the liquefied paper may be hardened by adding a curing agent ordinarily used for phenolic resins.

Liquefaction of lignocellulose starts from the paper surface being contacting with the liquefying agent. If the liquefaction efficiency is low, a large amount of paper residue remains in the liquefied product. However, in the present invention, the ratio of the paper residue to the raw paper (this is measured for water-insoluble matters as described in EXAMPLES) is reduced to 30 % by weight or less after 5 to 20 minutes of liquefaction treatment, in accordance with the construction that paper is broken with shear action into small pieces before liquefaction and the paper pieces are kneaded by an extruder during the liquefaction. As a result, it is made possible to obtain a liquefied lignocellulose product in which the content of paper residue is about 20 % by weight or less. Moreover, the dimensions of the paper residue remaining in the liquefied product becomes smaller by breaking the paper to be liquefied into small pieces. Therefore, quality of the plastic product manufactured from the liquefied product is improved as well.

As described above, it is possible to efficiently manufacture a large volume of liquefied product from paper materials by a continuous treatment at a low cost, in accordance with the above-described liquefaction method. At the same time, the liquefied product obtained therefrom has uniform quality so that it is possible to manufacture plastic product without dispersion.

EXAMPLES

Examples of the liquefaction of paper according to the present invention will now be described in detail below. Here, it is to be noted that each of the units, "%" and "part", is used as that expressed by weight, respectively, in this section.

(Example 1)

Used paper sheets (A4 size) recovered from OA devices were put into a shear-cutting type cutting machine (code: JC-5 type, manufactured by Morita Seiki Industrial Co., Ltd. of Saitama, Japan) equipped with a screen with openings having a diameter of 2 mm, to obtain pieces of used paper. In 99 % or more of the pieces of used paper, the length of the longest side of the piece was 2 mm or less and the thickness was 0.2 mm or less.

A bench extruder (manufactured by Harada Seisakujo of Tokyo, Japan) having a chage hopper in which the bore diameter was 20 mm was heated to adjust the temperature to 170 °C, and 100 parts of the used paper pieces obtained above were put into the bench extruder together with 140 parts of polyethylene glycol (average molecular weight: about 400), 60 parts of glycerin and 6 parts of sulfuric acid (concentration: 97 %) through the charge hopper. The velocity of rotation of the screw of the bench extruder was low-rate of 13 rpm.

After 15 minutes passed from the charging, a black-colored liquefied product began to flow out continuously from a nozzle of the bench extruder. The liquefied product obtained above was subjected to measurement of the percent residue, the percent residue content and the viscosity of the liquefied product in accordance with the following methods. The results of the measurement are shown in Table 1.

[measurement of the residues of the paper and of the liquefied product]

First, 2 g of the liquefied product was diluted with ion-exchange water and sufficiently stirred to dissolve liquefied paper into water, thereby preparing a dilute solution of the liquefied paper. Next, using a filter paper which had been completely dried and weighed in advance, the dilute solution of the liquefied paper was filtered. The filter paper after the filtration was dried at 110 °C to a constant weight. From the weight values of the filter paper before and after the filtration, the weight of the residue, which included unliquefied paper and insoluble matters by incomplete liquefaction, was obtained, and the percent residue and the percent residue content were calculated by the following equations.

$$\text{percent residue (\%)} = \frac{\text{weight (g) of residue}}{\text{weight (g) of raw paper}} \times 100$$

$$\text{percent residue content (\%)} =$$

$$\frac{\text{weight (g) of residue}}{\text{weight (g) of liquefied product}} \times 100$$

[measurement of the viscosity of liquefied product]

The liquefied product in a glass tube of 40 $\phi$mm was placed in a thermostatic bath in which the temperature was controlled to 80 °C, and the viscosity of the liquefied product being kept to a constant temperature was measured by a B type viscometer (manufactured by Toki Industry Co., Ltd. of Tokyo, Japan).

(Examples 2 and 3)

In each of Examples 2 and 3, the procedure of Example 1 was repeated, excepting that the amount of the used paper pieces put into the bench extruder was changed to 150 parts (Example 2) or 200 parts (Example 3), to obtain a liquefied product. The liquefied product was similarly subjected to measurement of the percent residue, the percent residue content and the viscosity of the liquefied product. The results of the measurement are shown in Table 1.

(Examples 4 and 5)

In each of Examples 4 and 5, the used paper was broken into pieces by the same manner as Example 1.
A twin-screw extruder (code: TEM-37BS, manufactured by Toshiba Machine Co., Ltd. of Tokyo, Japan) was set for liquefaction of the used paper pieces so that the cylinder temperature of the extruder was raised to 180 °C and the rotational velocity of the screws was adjusted to 30 rpm. Into the twin-screw extruder, 150 parts (Example 4) or 200 parts (Example 5) of the used paper pieces, 140 parts of polyethylene glycol (average molecular weight: about 400), 60 parts of glycerin and 6 parts of sulfuric acid (concentration: 97 %) were put into the extruder through the a charging hopper in such a manner that the feed rate of the used paper pieces to the extruder was 3.6 kg/hour.
After 15 minutes passed from the charging, a black-colored liquefied product began to flow out continuously from the nozzle of the extruder. The liquefied product obtained above was subjected to measurement of the percent residue, the percent residue content and the viscosity of the liquefied product in the same manners as Example 1. The results of the measurement are shown in Table 1.

(Example 6)

Used Paper sheets (A4 size) recovered from OA devices were put into a shredder to obtain paper strips having a width of 5 mm. The paper strips were further broken by a desk-type crusher. Since the broken paper formed a mass of paper pieces in which paper fibers were raised and entangled like cotton wool, it was further cut by a shear-cutting type cutting machine (code: JC-5 type, manufactured by Morita Seiki Industrial Co., Ltd. of Saitama, Japan) equipped with a screen with openings having a diameter of 1 mm. The cut pieces of used paper obtained above were fluid in a state of powder in which there was not seen entangled fibers. Observing the pieces of used paper under a microscope, 16.3 % of the pieces of used paper had the longest side being 1 mm or more.
A bench extruder (manufactured by Harada Seisakujo of Tokyo, Japan) having a charging hopper in which the bore diameter was 20 mm was heated to adjust the temperature to 170 °C, and 100 parts of the used paper pieces obtained above were put into the bench extruder together with 140 parts of polyethylene glycol (average molecular weight: about 400), 60 parts of glycerin and 6 parts of sulfuric acid (concentration: 97 %) through the charging hopper, The rotation velocity of the screw of the bench extruder was low rate of 13 rpm.
After 15 minutes passed from the charging, a black-colored liquefied product began to flow out continuously from the nozzle of the bench extruder. The liquefied product obtained above was subjected to measurement of the percent residue, the percent residue content and the viscosity of the liquefied product in the same manners as

Example 1. The results of the measurement are shown in Table 1.

As shown in Table 1, the percent residue and the viscosity of the liquefied product were 7.5 % and 38 P, respectively, and the quality of the liquefied product was suitable for use.

Table 1

| Example | 1 | 2 | 3 | 4 | 5 | 6 |
|---|---|---|---|---|---|---|
| paper (part) | 100 | 150 | 200 | 150 | 200 | 100 |

Table 1   (continued)

| Example | 1 | 2 | 3 | 4 | 5 | 6 |
|---|---|---|---|---|---|---|
| polyethylene glycol (part) | 140 | 140 | 140 | 140 | 140 | 140 |
| glycerin (part) | 60 | 60 | 60 | 60 | 60 | 60 |
| sulfuric acid (part) [conc. 97%] | 6 | 6 | 6 | 6 | 6 | 6 |
| percent residue (%) | 8 | 11 | 16 | 10 | 14 | 7.5 |
| percent residue content (%) | 2.6 | 4.2 | 8 | 4.2 | 7 | 2.5 |
| viscosity (P) | 41 | 60 | 186 | 45 | 122 | 38 |

(Comparative Example 1)

Used Paper sheets (A4 size) recovered from OA devices were put into a shredder to obtain paper strips having a width of 5 mm. The paper strips were further cut with scissors. Of the cut pieces of used paper obtained above, the ratio of pieces that the length of the longest side was 5 mm or less was less than 1 %.

A bench extruder (manufactured by Harada Seisakujo of Tokyo, Japan) having a charging hopper in which the bore diameter was 20 mm was heated to adjust the temperature to 170 °C, and the rotational velocity of the screw of the bench extruder was low-rate of 13 rpm. Moreover, 100 parts of the used paper pieces obtained above were mixed with 140 parts of polyethylene glycol (average molecular weight: about 400), 60 parts of glycerin and 6 parts of sulfuric acid (concentration; 97 %), and the mixture was put into the charging hopper of the bench extruder. However, it was difficult to feed the mixture into the extruder and most part of the mixture was remaining at the charging hopper, so that liquefaction of paper did not proceed. The rotational velocity of the screw was changed gradually from 13 rpm up to 30 rpm. However, there was few change in feeding of the mixture into the extruder.

(Comparative Example 2)

The procedure of Comparative Example 1 was repeated, excepting that, instead of the bench extruder, a twin-screw extruder (code: TEM-37BS, manufactured by Toshiba Machine Co., Ltd. of Tokyo, Japan) in which the cylinder temperature of the extruder was raised to 180 °C and the rotational velocity of the screws was adjusted to 60 rpm was used. However, it was difficult to feed the paper mixture into the extruder and most part of the mixture was remaining at the charging chopper, so that liquefaction of paper did not proceed. The rotational velocity of the screw was changed gradually from 60 rpm up to 100 rpm. However, there was few change in feeding of the paper mixture into the extruder.

(Comparative Example 3)

Used Paper sheets (A4 size) recovered from OA devices were put into a shredder to obtain paper strips having a width of 5 mm. The paper strips were further broken by a desk-type crusher. The broken paper formed a lump of paper pieces in which paper fibers were raised at the broken edges and entangled like cotton wool.

A bench extruder (manufactured by Harada Seisakujo of Tokyo, Japan) having a charging hopper in which the bore diameter was 20 mm was heated to adjust the temperature to 170 °C. Moreover, 100 parts of the used paper pieces obtained above were mixed with 140 parts of polyethylene glycol (average molecular weight: about 400), 60 parts of glycerin and 6 parts of sulfuric acid (concentration: 97 %), and this paper mixture was put into the charging hopper of the bench extruder. The screw of the bench extruder was then rotated at a low rate of 13 rpm. During the charging, since the charging hopper was often choked with the paper mixture, the extruder was stopped at every occurrence of choking in order to manually push the paper mixture into the extruder. The liquefied product flew out of the extruder had unliquefied paper spots having a dimension of about 1 mm. Therefore, liquefaction did not sufficiently proceed.

(Comparative Example 4)

Used Paper sheets (A4 size) recovered from OA devices were put into a shredder to obtain paper strips having a width of 5 mm. The paper strips were further cut with scissors. Of the cut pieces of used paper obtained above, the ratio of pieces that the length of the longest side was 5 mm or less was less than 1 %.

Then, 100 parts of the used paper pieces obtained above were mixed with 140 parts of polyethylene glycol (average molecular weight: about 400), 60 parts of glycerin and 6 parts of sulfuric acid (concentration: 97 %), and the mixture was put into a kneader (code: KM-5 type, manufactured by Dalton of Japan) and heated at 150 °C for 1 hour while the mixture was stirred. During the stirring, the paper strips were entangled in each other and were sometimes

**EP 1 036 878 B1**

engaged between the kneader blade and the container to stop the operation with alarming.

After the above operation, the liquefied product was obtained in a liquid state but unliquefied paper pieces which could be visually recognized were remaining.

The liquefied product was subjected to measurement of the percent residue and the percent residue content of the liquefied product in the same manners as Example 1. As a result, the percent residue was 80 % and the percent residue content was 19.6 %.

(Example 7)

To 100 parts of the liquefied product obtained in Example 4. 4 parts of imidazol and 2 parts of a foam stabilizern (code: SZ-1627, manufactured by Nippon Unicar Co., Ltd. of Tokyo, Japane) were added and the mixture was vigorously stirred for 20 seconds. Moreover, this mixture was further mixed with 75 parts of isocyanate (code: MDI-100, manufactured by Nippon Polyurethane Industry Co., Ltd. of Tokyo, Japan) and vigorously stirred for 10 seconds. The mixture was poured into a mold which had been previously prepared, thereby obtaining moldings. The moldings had a sufficient quality for the cushioning material.

In accordance with the above method, it was also possible to form a flame of interior light fitment, a damper and a cushioning material for interior automotive trims similarly from the liquefied product.

(Example 8)

A mass of used paper which included news papers, magazines and shredded paper strips recovered from OA devices was placed in a tank made of iron. Water was poured into the tank and it was slowly stirred overnight. The liquid containing loosened paper fibers was pumped up from the tank and dried to obtain a mass of dried paper fibers. It was placed in an oven to further dry it up. The mass of paper obtained above was put into a shear-cutting type cutting machine (code: JC-5 type, manufactured by Morita Seiki Industrial Co., Ltd. of Saitama, Japan) equipped with a screen with openings having a diameter of 1 mm, to break the paper. The broken paper was in a state of fluidic powder in which paper fibers were not entangled. Observing the broken paper under a microscope, 7.4 % of the broken paper were paper fibers having a length exceeding 1 mm.

Then 100 parts of the broken paper obtained above was mixed with 100 parts of phenol and 3 parts of sulfuric acid and the mixture was poured into a bench extruder (manufactured by Harada Seisakujo of Tokyo, Japan) which was heated to 150 °C and operated for 1 hour, to obtain a liquefied product. The liquefied product was subjected to the measurement of the percent residue described in Example 1. As a result, the percent residue was 8.2 %. When the liquefied product was left to stand at a room temperature. it was solidified.

Into a Henschel mixer, 100 parts of the solidified product obtained above, 100 parts of silica powder (trade name: NA1, manufactured by Tatsumori Co., Ltd. of Tokyo, Japan) having an average particle size of 10 μm, 50 parts of glass fiber chopped strand (Nippon Sheet Glass Co., Ltd. of Tokyo, Japan) having a length of 1mm, 2 parts of carnauba wax, 6 parts of calcium hydroxide and 25 parts of hexamethylenetetramine as a curing agent were placed and mixed with each other. The mixture was heated to 120 °C and the molten mixture was kneaded for 1 minute with a pair of rolls. The molten mixture was then cooled to a room temperature to solidify it. It was further pulverized and compressed into tablets having dimensions of 10 φ x 10 mm.

Using the tablets obtained above as a material for press molding, it was able to produce a substrate for printed wiring boards, a case of personal computers, a case of cellular phones and the like. Each of the press-molded products had a favourable appearance and satisfied requirements for practical use.

As clearly understood from the above description, it is possible, according to the present invention, to efficiently·prepare a liquefied paper composition from a used paper material at a low cost through a continuous extrusion line. Moreover, it is possible, by using the liquefied product, to practically form various plastic, moldings of high usefulness. Accordingly, recycling applicability of used paper is enlarged and consumption of the fossil resource is reduced. Therefore, liquefaction of paper according to the present invention has a great value for reservation and use with advantage of natural resources.

**Claims**

**1.** A method of liquefying a paper material, comprising the steps of:

shear breaking the paper material into small pieces of paper;
mixing the broken paper with a liquefying agent comprising: an alkaline catalyst or an acidic catalyst; and at least one liquid compound which is selected from the group consisting of hydroxyphenyl compound, polyol and cyclic ester, to obtain a mixture; and
heating the mixture, thereby obtaining a liquefied paper composition,

wherein the paper material is broken at the shear breaking step so that the length of the longest side of each piece in at least 50 % by weight of the broken paper is 5 mm or less.

2. The liquefying method of claim 1, wherein the paper material is broken at the shear breaking step so that the paper fibers of the broken paper are not raised, and the length of the shortest side of each piece in at least 50 % by weight of the broken paper is 0.5 mm or less.

3. The liquefying method of either of claims 1 to 2 wherein the mixing step and the heating step are performed by using an extruder.

4. The liquefying method of either of claims 1 to 3 wherein the paper material includes at least one material selected from the group consisting of coated paper, resin-composited paper and shredded paper.

5. The liquefying method of either of claims 1 to 4 wherein the paper material is pulp sludge, and the paper material is cut at the shear breaking step so that the ratio of paper fibers having a length of 1 mm or more is reduced to 20 % by weight or less.

6. The liquefying method of either of claims 1 to 5, wherein the liquefying agent of the mixing step comprises: the alkaline or acidic catalyst at a ratio of 0.2 to 10 % by weight relative to the broken paper; and the liquidus compound at a ratio of 50 to 300 % by weight relative to the broken paper, and the mixture at the heating step is heated at a temperature of 100 to 200 °C.

7. The liquefying method of either of claims 1 to 6, wherein the hydroxyphenyl compound is selected from the group consisting of phenol, cresol, xylenol, resorcinol, acrylic resorcinol and bisphenol A,

the polyol is selected from the group consisting of ethylene glycol, propylene glycol, trimethylene glycol, 1,4-butanediol, 1,5-pentanediol, 1,6-hexanediol, 1,2-hexanediol, 2,4-hexanediol, 1,7-heptanediol, 1,8-octanediol, 1,9-nonanediol, 1,10-decanediol, pinacol, cyclopentane-1,2-diol, cyclohexane-1,4-diol, polyethyleneglycol, polyoxypropyleneglycol, polyoxypropylene-polyoxyethylene glycol, glycerin, trimethyrolpropane, triethanolamine, 1,2,6-hexanetriol, pentaerythritol, methyl glucoside, sorbitol, mannitol and sucrose,
the cyclic ester is selected from the group consisting of propionolactone, $\beta$-butylolactone, $\alpha,\alpha'$-bischloromethylpropionolactone, $\alpha,\alpha$-dimethyl-$\beta$-propionolactone, $\delta$-valerolactone, 1,4-dioxane-2-on, glycolide, trimethyl carbonate, neopentyl carbonate, ethylene oxalate, propion oxalate, $\varepsilon$-caprolactone, $\alpha$-methyl-$\varepsilon$-caprolactone, $\beta$-methyl-$\varepsilon$-caprolactone, $\gamma$-methyl-$\varepsilon$-caprolactone, 4-methyl-7-isopropyl-$\varepsilon$-caprolactone, 3,3,5-trimethyl-$\varepsilon$-caprolactone, cis-disalicylide and trisalicylide,
the alkaline catalyst is selected from the group consisting of alkaline metal hydroxide, alkaline-earth metal hydroxide, alkaline earth metal carbonate, ammonia and amino compound, and
the acidic catalyst is selected from the group consisting of sulfuric acid, hydrochloric acid, toluensulfonic acid, phenol sulfonic acid, aluminum chloride, zinc chloride and boron trifluoride.

8. A liquefied paper composition, comprising:

a liquidus compound which is selected from the group consisting of hydroxyphenyl compound, polyol and cyclic ester; and
a liquefied matter of paper fibers obtained by the liquefying method of any one of claims 1 to 7,

wherein the ratio of a paper residue in the liquefied paper composition is 20 % by weight or less.

9. A method of manufacturing a plastic molding from a paper material by using the liquefied paper composition obtained by the liquefying method of either of claims 1 to 7, comprising the steps of:

mixing the liquefied paper composition with isocyanate compound and a urethan polymerization catalyst or with a curing agent for phenol resins; and
manufacturing a molding from the mixture of the liquefied paper composition.

**Patentansprüche**

1. Verfahren zur Verflüssigung eines Papiermaterials, das die folgenden Schritte umfasst:

   Scherkraftzerkleinern des Papiermaterials in kleine Papierstücke;

   Vermischen des zerkleinerten Papiers mit einem Verflüssigungsmittel, das einen alkalischen Katalysator oder einen sauren Katalysator und mindestens eine flüssige Komponente, die ausgewählt ist aus einer Hydroxyphenylverbindung, Polyol und einem cyclischen Ester, umfasst, wodurch eine Mischung erhalten wird; und

   Erwärmen der Mischung, wodurch eine verflüssigte Papierzusammensetzung erhalten wird, worin das Papiermaterial in dem Scherzerkleinerungsschritt so zerkleinert wird, dass die Länge der längsten Seite jedes Stücks von mindestens 50 Gew.% des zerkleinerten Papiers 5 mm oder weniger beträgt.

2. Verflüssigungsverfahren gemäss Anspruch 1, worin das Papiermaterial in dem Scherzerkleinerungsschritt so zerkleinert wird, dass die Papierfasern des zerkleinerten Papiers nicht aufgerichtet werden und die Länge der kürzesten Seite jedes Stücks von mindestens 50 Gew.% des zerkleinerten Papiers 0,5 mm oder weniger beträgt.

3. Verflüssigungsverfahren gemäss Anspruch 1 oder 2, worin der Vermischungsschritt und der Erwärmungsschritt unter Verwendung eines Extruders durchgeführt werden.

4. Verflüssigungsverfahren gemäss mindestens einem der Ansprüche 1 bis 3, worin das Papiermaterial mindestens ein Material einschliesst, ausgewählt aus beschichtetem Papier, Harzkompositpapier und Papierschnitzeln.

5. Verflüssigungsverfahren gemäss mindestens einem der Ansprüche 1 bis 4, worin das Papiermaterial Pulpenschlamm ist, und das Papiermaterial wird im Scherzerkleinerungsschritt so geschnitten, dass der Anteil an Papierfasern mit einer Länge von 1 mm oder mehr auf 20 Gew.% oder weniger verringert wird.

6. Verflüssigungsverfahren gemäss mindestens einem der Ansprüche 1 bis 5, worin das Verflüssigungsmittel des Vermischungsschrittes folgendes umfasst: den alkalischen oder sauren Katalysator in einer Menge von 0,2-10 Gew.%, bezogen auf das zerkleinerte Papier; und die Verflüssigungsverbindung in einer Menge von 50-300 Gew.%, relativ zum zerkleinerten Papier, und im Erwärmungsschritt wird die Mischung auf eine Temperatur von 100-200°C erwärmt.

7. Verflüssigungsverfahren gemäss mindestens einem der Ansprüche 1 bis 6, worin die Hydroxyphenylverbindung ausgewählt ist aus Phenol, Kresol, Xylenol, Resorcinol, Acrylresorcinol und Bisphenol A,

   das Polyol ist ausgewählt aus Ethylenglykol, Propylenglykol, Trimethylenglykol, 1,4-Butandiol, 1,5-Pentandiol, 1,6-Hexandiol, 1,2-Hexandiol, 2,4-Hexandiol, 1,7-Heptandiol, 1,8-Octandiol, 1,9-Nonandiol, 1,10-Decandiol, Pinacol, Cyclopentan-1,2-diol, Cyclohexan-1,4-diol, Polyethylenglykol, Polyoxypropylenglykol, Polyoxypropylenpolyoxyethylenglykol, Glycerin, Trimethylolpropan, Triethanolamin, 1,2,6-Hexantriol, Pentaerythrit, Methylglucosid, Sorbit, Mannit und Saccharose,

   der cyclische Ester ist ausgewählt aus Propionlacton, $\beta$-Butyrolacton, $\alpha,\alpha'$-Bischlormethylpropionlacton, $\alpha,\alpha$-Dimethyl-$\beta$-propionlacton, $\delta$-Valerolacton, 1,4-Dioxan-2-on, Glykolid, Trimethylcarbonat, Neopentylcarbonat, Ethylenoxalat, Propionoxalat, $\varepsilon$-Caprolacton, a-Methyl-$\varepsilon$-caprolacton, $\beta$-Methyl-$\varepsilon$-caprolacton, $\gamma$-Methyl-$\varepsilon$-caprolacton, 4-Methyl-7-isopropyl-$\varepsilon$-caprolacton, 3,3,5-Trimethyl-$\varepsilon$-caprolacton, cis-Disalicylid und Trisalicylid,

   der alkalische Katalysator ist ausgewählt aus Alkalimetallhydroxid, Erdalkalimetallhydroxid, Erdalkalimetallcarbonat, Ammoniumoxid und Aminoverbindungen, und

   der saure Katalysator ist ausgewählt aus Schwefelsäure, Salzsäure, Toluolsulfonsäure, Phenolsulfonsäure, Aluminiumchlorid, Zinkchlorid und Bortrifluorid.

8. Verflüssigte Papierzusammensetzung, die eine Verflüssigungsverbindung, ausgewählt aus einer Hydroxyphenylverbindung, Polyol und einem cyclischen Ester; und

eine verflüssigte Materie aus Papierfasern umfasst, die erhalten wird nach dem Verflüssigungsverfahren gemäss mindestens einem der Ansprüche 1 bis 7,

worin der Anteil an Papierrückständen in der verflüssigten Papierzusammensetzung 20 Gew.% oder weniger beträgt.

9. Verfahren zur Herstellung eines Kunststofformteils aus einem Papiermaterial unter Verwendung der verflüssigten Papierzusammensetzung, die nach dem Verflüssigungsverfahren gemäss mindestens einem der Ansprüche 1 bis 7 erhalten wird, das folgende Schritte umfasst:

Vermischen der verflüssigten Papierzusammensetzung mit einer Isocyanatverbindung und einem Urethan-Polymerisationskatalysator oder mit einem Härter für ein Phenolharz; und

Herstellen eines Formteils aus der Mischung aus der verflüssigten Papierzusammensetzung.


**Revendications**

1. Procédé pour liquéfier un matériau de papier comprenant les étapes consistant à :

casser par cisaillement le matériau de papier en de petits morceaux de papier ;
mélanger le papier cassé avec un agent liquéfiant comprenant : un catalyseur alcalin ou un catalyseur acide ; et au moins un composé liquide qui est choisi dans le groupe constitué par un composé hydroxyphényle, un polyol et un ester cyclique, pour obtenir un mélange ; et
chauffer le mélange, pour obtenir ainsi une composition de papier liquéfié,

dans lequel on casse le matériau de papier dans l'étape consistant à casser le papier par cisaillement de manière que la longueur du côté le plus long de chaque pièce dans au moins 50 % en poids du papier cassé soit de 5 mm ou moins.

2. Procédé de liquéfaction selon la revendication 1, dans lequel on casse le matériau de papier dans l'étape consistant à casser le papier par cisaillement de manière que les fibres de papier du papier cassé ne soient pas dressées, et que la longueur du côté le plus court de chaque pièce dans au moins 50 % en poids du papier cassé soit de 0,5 mm ou moins.

3. Procédé de liquéfaction selon l'une des revendications 1 à 2, dans lequel on effectue l'étape de mélange et l'étape de chauffage en utilisant une extrudeuse.

4. Procédé de liquéfaction selon l'une des revendications 1 à 3, dans lequel le matériau de papier comprend au moins un matériau choisi dans le groupe constitué par du papier couché, du papier composite avec de la résine et du papier déchiqueté.

5. Procédé de liquéfaction selon l'une des revendications 1 à 4, dans lequel le matériau de papier est une boue de pâte, et le matériau de papier est coupé dans l'étape consistant à casser par cisaillement de manière que le rapport des fibres de papier ayant un longueur de 1 mm ou plus soit réduit à 20 % en poids ou moins.

6. Procédé de liquéfaction selon l'une des revendications 1 à 5, dans lequel l'agent liquéfiant de l'étape de mélange comprend : le catalyseur alcalin ou acide selon un rapport de 0,2 à 10 % en poids par rapport au papier cassé ; et le composé liquide selon un rapport de 50 à 300 % en poids par rapport au papier cassé, et on chauffe le mélange à l'étape de chauffage à une température de 100 à 200°C.

7. Procédé de liquéfaction selon l'une des revendications 1 à 6, dans lequel le composé hydroxyphényle est choisi dans le groupe constitué par le phénol, le crésol, le xylénol, le résorcinol, le résorcinol acrylique et le bisphénol A,

le polyol est choisi dans le groupe constitué par l'éthylèneglycol, le propylèneglycol, le triméthylèneglycol, le 1,4-butanediol, le 1,5-pentanediol, le 1,6-hexanediol, le 1,2-hexanediol, le 2,4-hexanediol, le 1,7-heptanediol, le 1,8-octanediol, le 1,9-nonanediol, le 1,10-décanediol, le pinacol, le cyclopentane-1,2-diol, le cyclohexane-1,4-diol, le polyéthylèneglycol, le polyoxypropylèneglycol, le polyoxypropylène-polyoxyéthylèneglycol, la glycérine, le triméthylolpropane, la triéthanolamine, le 1,2,6-hexanetriol, le pentaérythitol, le méthylglucoside, le sorbitol, le mannitol et le saccharose,

l'ester cyclique est choisi dans le groupe constitué par la propiolactone, la β-butyrolactone, l'α,α'-bischloro-méthylpropionolactone, l'α,α-diméthyl-β-propionolactone, la δ-valérolactone, la 1,4-dioxane-2-one, le glycolide, le carbonate de triméthyle, le carbonate de néopentyle, l'oxalate d'éthylène, l'oxalate propionique, la ε-caprolactone, l'α-méthyl-ε-caprolactone, la β-méthyl-ε-caprolactone, la γ-méthyl-ε-caprolactone, la 4-méthyl-7-isopropyl-ε-caprolactone, la 3,3,5-triméthyl-ε-caprolactone, le cis-disalicylide et le trisalicylide,

le catalyseur alcalin est choisi dans le groupe constitué par un hydroxyde de métal alcalin, un hydroxyde de métal alcalino-terreux, un carbonate de métal alcalino-terreux, l'ammoniac et un composé amino, et

le catalyseur acide est choisi dans le groupe constitué par l'acide sulfurique, l'acide chlorhydrique, l'acide toluènesulfonique, l'acide phénolsulfonique, le chlorure d'aluminium, le chlorure de zinc et le trifluorure de bore.

**8.** Composition de papier liquéfié, comprenant :

un composé liquide qui est choisi dans le groupe constitué par un composé hydroxyphényle, un polyol et un ester cyclique ;
une matière liquéfiée de fibres de papier obtenue par le procédé de liquéfaction selon l'une quelconque des revendications 1 à 7,

dans laquelle le rapport d'un résidu de papier dans la composition de papier liquéfié est 20 % en poids ou moins.

**9.** Procédé de fabrication d'une pièce moulée à partir d'un matériau de papier en utilisant la composition de papier liquéfié obtenue par le procédé de liquéfaction selon l'une des revendications 1 à 7, comprenant les étapes consistant à:

mélanger la composition de papier liquéfié avec un composé isocyanate et un catalyseur de polymérisation uréthane ou avec un agent de durcissement pour des résines phénoliques ; et
fabriquer une pièce moulée à partie du mélange de la composition de papier liquéfiée.

FIG.1